(19) Europäisches Patentamt
European Patent Office
Office européen des brevets

(11) EP 4 201 991 A1

(12) EUROPEAN PATENT APPLICATION
published in accordance with Art. 153(4) EPC

(43) Date of publication:
28.06.2023 Bulletin 2023/26

(21) Application number: 21858302.9

(22) Date of filing: 17.08.2021

(51) International Patent Classification (IPC):
C08K 5/5313 (2006.01) C08L 67/02 (2006.01)
B29C 64/153 (2017.01) C08G 63/183 (2006.01)
B33Y 70/00 (2020.01)

(52) Cooperative Patent Classification (CPC):
B29C 64/153; B33Y 70/00; C08G 63/183;
C08K 5/5313; C08L 67/02

(86) International application number:
PCT/JP2021/030031

(87) International publication number:
WO 2022/039158 (24.02.2022 Gazette 2022/08)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 19.08.2020 JP 2020138638

(71) Applicants:
- Mitsubishi Engineering-Plastics Corporation
Tokyo 105-0021 (JP)
- Mitsubishi Chemical Corporation
Chiyoda-ku
Tokyo 100-8251 (JP)

(72) Inventors:
- SHOJI, Hidekazu
Hiratsuka-shi, Kanagawa 254-0016 (JP)
- KISHISHITA, Minoru
Tokyo 100-8251 (JP)
- YAMASUE, Nao
Tokyo 100-8251 (JP)

(74) Representative: Vossius & Partner
Patentanwälte Rechtsanwälte mbB
Siebertstraße 3
81675 München (DE)

# (54) RESIN COMPOSITION FOR POWDER LAMINATION SHAPING METHOD, POWDER, SHAPED ARTICLE MANUFACTURING METHOD, AND SHAPED ARTICLE

(57) To provide a resin composition for powder additive manufacturing which suppresses the powder fusion upon preheated up in a 3D printer for manufacturing; pellet; a powder; a method for manufacturing a formed article; and a formed article. The resin composition is used for powder additive manufacturing, comprising a polybutylene terephthalate-based resin that has a terephthalic acid-derived structural unit and a 1,4-butanediol-derived structural unit, and, a phosphorus atom-containing compound, the resin composition demonstrating a shearing stress of 0.30 $N/cm^2$ or smaller, with the particle size $D_{50}$ adjusted within the range from 20 to 80 um, after annealed for one hour at a temperature lower by 25°C than a melting point of the polybutylene terephthalate-based resin measured by differential scanning calorimetry.

EP 4 201 991 A1

**Description**

TECHNICAL FIELD

This invention relates to a resin composition for powder additive manufacturing, a powder, a method for manufacturing a formed article, and a formed article.

BACKGROUND ART

A technique of applying liquid or powder to a base, and then solidifying the liquid or powder to model a three-dimensional structure, which is so-called 3D printing technology, has attracted attention. The technology is specifically exemplified by (i) fused deposition modeling in which a resin is melted under heating and extruded typically through a dispenser, (ii) material jetting method in which a photocurable resin liquid is jetted through a nozzle, and then solidified under UV irradiation, (iii) binder jetting method in which a photocurable resin liquid or a powder is jetted through a nozzle, and then solidified under UV irradiation, (iv) powder additive manufacturing (including multi-jet fusion method also known as powder lamination modeling) in which a powder is accumulated and then cured typically under laser irradiation or under heating with a halogen lamp, and (v) stereolithography in which a photocurable resin liquid is applied and then solidified under UV irradiation.

Patent Literature 1 discloses a resin powder used for powder additive manufacturing, wherein the resin powder is a polybutylene terephthalate resin whose crystallization temperature is lower than that of homopolybutylene terephthalate resin.

Patent Literature 2 discloses a resin powder used for powder additive manufacturing, wherein the resin powder is a mixed resin powder that contains a first thermoplastic resin material having a first melting point, and a second thermoplastic resin material having a second melting point higher than the first melting point.

Patent Literature 3 discloses a resin powder used for powder additive manufacturing, wherein the resin powder is formed of a polybutylene terephthalate resin whose crystallization temperature is lower than that of homopolybutylene terephthalate resin; and, the polybutylene terephthalate resin is a copolymer obtainable by copolymerizing a resin material, which is a polycondensation product of a dicarboxylic acid component that contains terephthalic acid or an ester-forming derivative thereof, and a glycol component that contains 1,4-butanediol or an ester-forming derivative thereof, with a co-polymerizable monomer such as other co-polymerizable dicarboxylic acid (or an ester-forming derivative thereof) or other diol (or an ester-forming derivative thereof), wherein the co-polymerizable component accounts for 3 to 30 mol%, and has a melting point of 200 to 215°C.

CITATION LIST

PATENT LITERATURE

[Patent Literature 1] WO 2016/121013
[Patent Literature 2] WO 2017/179139
[Patent Literature 3] JP 6033994 B1

SUMMARY OF THE INVENTION

TECHNICAL PROBLEM

As disclosed in the aforementioned Patent Literatures, use of the polybutylene terephthalate-based resin as a powder for powder additive manufacturing has been discussed.

It was however found that, the powder would occasionally fuse upon preheated up to around its melting point in a 3D printer for powder additive manufacturing, thus making the powder application less uniform.

This invention is therefore aimed at solving the aforementioned problem, and an object of which is to provide a resin composition for powder additive manufacturing, which is less likely to cause powder fusion even if preheated nearly at the melting point, and excels in powder applicability (re-coatability); a powder; a method for manufacturing a formed article; and a formed article.

SOLUTION TO PROBLEM

The present inventors conducted research to address the above-mentioned problems, and as a result, the problems described above are solved by the following means.

<1> A resin composition used for powder additive manufacturing, comprising a polybutylene terephthalate-based resin that has a terephthalic acid-derived structural unit and a 1,4-butanediol-derived structural unit, and, a phosphorus atom-containing compound,
the resin composition demonstrating a shearing stress of 0.30 $N/cm^2$ or smaller, with the particle size Dso adjusted within the range from 20 to 80 μm, after annealed for one hour at a temperature lower by 25°C than a melting point of the polybutylene terephthalate-based resin measured by differential scanning calorimetry.
<2> The resin composition of <1>, having a melting point, measured by differential scanning calorimetry, of lower than 200°C.
<3> The resin composition of <1> or <2>, demonstrating a difference between a melting point measured by differential scanning calorimetry, and a crystallization temperature measured by differential scanning calorimetry, of 40°C or more.
<4> The resin composition of any one of <1> to <3>, wherein the phosphorus atom-containing compound is a phosphinate.
<5> The resin composition of any one of <1> to <3>, wherein the phosphorus atom-containing compound is aluminum tris(diethylphosphinate) .
<6> A powder for powder additive manufacturing, formed of the resin composition described in any one of <1> to <5>.
<7> A powder for powder additive manufacturing, comprising a polybutylene terephthalate-based resin that has a terephthalic acid-derived structural unit and a 1,4-butanediol-derived structural unit, and, a phosphorus atom-containing compound, and the powder demonstrating a shearing stress of 0.30 $N/cm^2$ or smaller, after annealed for one hour at a temperature lower by 25°C than a melting point of the polybutylene terephthalate-based resin measured by differential scanning calorimetry.
<8> The powder of <6> or <7>, having a particle size $D_{50}$ of 20 to 80 μm.
<9> A method for manufacturing a formed article, the method comprising obtaining a formed article by powder additive manufacturing, with use of the powder described in any one of <6> to <8>.
<10> A formed article formed by powder additive manufacturing, with use of the powder described in any one of <6> to <8>.

ADVANTAGEOUS EFFECTS OF INVENTION

This invention is the first to provide a resin composition for powder additive manufacturing, which is less likely to cause powder fusion even if preheated nearly at the melting point, and excels in powder applicability (re-coating performance); a powder; a method for manufacturing a formed article; and a formed article.

DESCRIPTION OF EMBODIMENTS

Embodiments for carrying out the invention (simply referred to as "this embodiment", hereinafter) will be detailed below. The embodiments below are merely illustrative, so that this invention is not limited solely to these embodiments.
Note that all numerical ranges given in this patent specification, with "to" preceded and succeeded by numerals, are used to represent the ranges including these numerals respectively as the lower and upper limit values.
Various physical properties and characteristic values mentioned herein are those demonstrated at 23°C, unless otherwise specifically noted.
The resin composition for powder additive manufacturing of this embodiment (may simply be referred to as "the resin composition of this embodiment", hereinafter) includes a polybutylene terephthalate-based resin that contains a terephthalic acid-derived structural unit and a 1,4-butanediol-derived structural unit, and, a phosphorus atom-containing compound; the resin composition demonstrates a shearing stress of 0.30 $N/cm^2$ or smaller, with the particle size $D_{50}$ adjusted within the range from 20 to 80 μm, after annealed for one hour at a temperature lower by 25°C than a melting point of the polybutylene terephthalate-based resin measured by differential scanning calorimetry. With such structure, the resin composition for powder additive manufacturing, with suppressed powder applicability, may be provided.
More specifically, the powder having been used for powder additive manufacturing, composed of the polybutylene terephthalate-based resin, was found to degrade so-called powder applicability (re-coatability) which represents uniformity of powder application over a formed article, due to powder aggregation during preheating. The present inventors confirmed from our examination aimed to avoid the problem that the powder fusion was largely suppressed by adding a phosphorus atom-containing compound. In particular in this embodiment, the powder that remains dry even after

heating and excels in powder applicability (re-coatability) is obtainable.

<Shearing Stress of Powder>

The resin composition of this embodiment demonstrates a shearing stress of 0.30 N/cm$^2$ or smaller, with the particle size $D_{50}$ adjusted within the range from 20 to 80 μm, after annealed for one hour at a temperature lower by 25°C than a melting point of the polybutylene terephthalate-based resin measured by differential scanning calorimetry. The shearing stress of the powder with the particle size $D_{50}$ adjusted within the range from 20 to 80 μm means that the powder having a certain particle size $D_{50}$ within the range from 20 to 80 μm demonstrates a shearing stress of 0.30 N/cm$^2$ or smaller, without essentially needing that the powder demonstrates a shearing stress of 0.30 N/cm$^2$ or smaller over the entire range of the particle size $D_{50}$ from 20 to 80 μm. Such shearing stress may be achieved by adding the phosphorus atom-containing compound to the polybutylene terephthalate-based resin, followed by powderization. The resin composition preferably has the particle size $D_{50}$ within the range from 40 to 70 um. In this case, the predetermined value of the shearing stress is preferably demonstrated at a certain particle size $D_{50}$ within the range from 40 to 70 μm.

The shearing stress is preferably 0.25 N/cm$^2$ or smaller, more preferably 0.22 N/cm$^2$ or smaller, and even more preferably 0.20 N/cm$^2$ or smaller. A lower limit of the shearing stress of 0.01 N/cm$^2$, and further of 0.09 N/cm$^2$ or above, is enough for satisfying the performance requirement, although ideally zero.

<Melting Point and Crystallization Temperature of Resin Composition>

The resin composition of this embodiment preferably demonstrates a difference (Tm - Tc) between a melting point measured by differential scanning calorimetry, and a crystallization temperature measured by differential scanning calorimetry, of 40°C or more. With such structure, the modelability tends to further improve. The value of (Tm - Tc) is preferably 42°C or more, more preferably 44°C or more, and even more preferably 46°C or more. The upper limit value of (Tm - Tc) is typically 60°C or below, preferably 55°C or below, and even may be 50°C or below, although not specifically limited. With the value of (Tm - Tc) controlled to the aforementioned upper limit value or below, the appearance and performances during the modeling tend to be stabilized.

The resin composition of this embodiment preferably has a melting point of lower than 225°C, more preferably lower than 210°C, even more preferably lower than 200°C, and yet more preferably lower than 195°C. With the melting point adjusted to or below the aforementioned upper limit values, the intrinsic viscosity and yellowing may effectively be suppressed from increasing. Again with the melting point of the resin composition adjusted within the aforementioned ranges, the obtainable formed article tends to have further enhanced strength. The lower limit value of the melting point is preferably 150°C or above, more preferably 160°C or above, even more preferably 170°C or above, and yet more preferably 180°C or above. With the melting point adjusted to or above the aforementioned lower limit value, the obtainable formed article tends to have improved heat resistance.

The melting point of the resin composition is measured by a method described later in EXAMPLES.

The resin composition of this embodiment preferably has a crystallization temperature (Tc) of 130°C or higher, and 180°C or lower. With the crystallization temperature adjusted to or above the lower limit value, the obtainable formed article becomes less likely to soften, and less likely to cause defect in the formed article. The resin composition of this embodiment preferably has a crystallization temperature (Tc) of 135°C or higher, which is more preferably 140°C or higher. On the other hand, with the crystallization temperature adjusted to 180°C or below, the formed article may be more effectively prevented from causing uneven melting. With the resin composition given as a copolymeric polybutylene terephthalate, the formed article may be effectively suppressed from degrading the crystallinity, or may tend to improve the heat resistance, depending on the type of the copolymeric component. The upper limit value of the crystallization temperature of the resin composition of this embodiment is more preferably 175°C or below, and even more preferably 170°C or below.

The crystallization temperature of the resin composition is measured by a method described later in EXAMPLES.

<Polybutylene Terephthalate-Based Resin>

The resin composition of this embodiment contains a polybutylene terephthalate-based resin that has a terephthalic acid-derived structural unit and a 1,4-butanediol-derived structural unit.

The polybutylene terephthalate-based resin used in this embodiment may be a homopolymer solely composed of the terephthalic acid-derived structural unit and the 1,4-butanediol-derived structural unit; or may be a copolymeric polybutylene terephthalate that has the terephthalic acid-derived structural unit, the 1,4-butanediol-derived structural unit, and other additional structural unit. The copolymeric polybutylene terephthalate is preferred.

The homopolymeric polybutylene terephthalate-based resin in this specification conceptionally encompasses those containing the terephthalic acid-derived structural unit, the 1,4-butanediol-derived structural unit, and other additional structural unit whose content is equivalent to that of impurity.

Meanwhile, the copolymeric polybutylene terephthalate preferably contains the terephthalic acid-derived structural unit, the 1,4-butanediol-derived structural unit, and other additional dicarboxylic acid-derived structural unit, wherein the total of the terephthalic acid-derived structural unit, the 1,4-butanediol-derived structural unit, and the other additional dicarboxylic acid-derived structural unit (preferably derived from isophthalic acid) preferably accounts for 95 mol% or more.

Note that the terephthalic acid-derived structural unit conceptionally encompasses a terephthalic acid derivative-derived structural unit having the same structure as the terephthalic acid-derived structural unit. Similarly, the 1,4-butanediol-derived structural unit conceptionally encompasses a 1,4-butanediol derivative-derived structural unit having the same structure as the 1,4-butanediol-derived structural unit.

The polybutylene terephthalate-based resin used in this embodiment is preferably such that the terephthalic acid-derived structural unit and the 1,4-butanediol-derived structural unit constitute the major components of the polybutylene terephthalate-based resin. More specifically, these two structural units preferably account for a proportion exceeding 50 mol% of the polybutylene terephthalate-based resin, the proportion more preferably 75 mol% or more, even more preferably 80 mol% or more, yet more preferably 85 mol% or more, and even may be 88 mol% larger. The upper limit is not specifically limited, so that 100 mol% of the homopolymeric polybutylene terephthalate-based resin may be solely composed of the two aforementioned structural units.

The copolymerizable component other than terephthalic acid, used for the polybutylene terephthalate-based resin in this embodiment, is exemplified by isophthalic acid, naphthalene dicarboxylic acid, and succinic acid (or may be derivatives of them), all of which are dicarboxylic acids. The diol component other than 1,4-butanediol is exemplified by ethylene glycol, diethylene glycol, 1,3-propanediol, 1,4-cyclohexanedimethanol, 2,4-diethyl-1,5-pentanediol, butyl ethyl propanediol, spiroglycol, tricyclodecanedimethanol, and 9,9-bis[4-(2-hydroxyethoxy)phenyl]fluorene. Note, however, that this embodiment is by no means limited to these components. Among these copolymerizable components, isophthalic acid is particularly preferred for use, for its industrial availability and easiness of polymer production. A plurality of these copolymerizable components may be used at the same time.

In the polybutylene terephthalate-based resin used in this embodiment, 1,4-butanediol preferably accounts for 90 mol% or more of the diol component, and the proportion is more preferably 95 mol% or more, and even more preferably 100 mol%.

In the copolymeric polybutylene terephthalate that contains, as the copolymerizable component, a dicarboxylic acid component other than terephthalic acid, proportion of the content of the terephthalic acid, relative to the total dicarboxylic acid component assumed as 100 mol%, preferably accounts for 65 mol% or more, more preferably 70 mol% or more, and even more preferably 75 mol% or more. The upper limit value of the content of the terephthalic acid component is preferably 95 mol% or below, more preferably 93 mol% or below, and even more preferably 91 mol% or below. Meanwhile, in the copolymeric polybutylene terephthalate that contains, as the copolymerizable component, a dicarboxylic acid component other than terephthalic acid, proportion of the content of the dicarboxylic acid component other than terephthalic acid (for example, isophthalic acid), relative to the total dicarboxylic acid component assumed as 100 mol%, preferably accounts for 5 mol% or more, more preferably 7 mol% or more, and even more preferably 9 mol%. The upper limit value of the content of the dicarboxylic acid component other than terephthalic acid (for example, isophthalic acid) is preferably 35 mol% or below, more preferably 30 mol% or below, and even more preferably 25 mol% or below. With such structure, the heat resistance tends to improve, and a suitable level of crystallinity tends to be demonstrated more easily during modeling.

In particular in the copolymeric polybutylene terephthalate when used in this embodiment, terephthalic acid and isophthalic acid preferably account for 98 mol% or more of the total dicarboxylic acid component, the percentage is more preferably 99 mol% or more, and even more preferably 100 mol%.

The polybutylene terephthalate-based resin in this embodiment preferably has an intrinsic viscosity of 0.80 dL/g or more. The upper limit value of the intrinsic viscosity is typically 1.50 dL/g or below, and may even be 1.0 dL/g or below.

For determination of intrinsic viscosity, approximately 0.25 g of polybutylene terephthalate-based resin is dissolved into approximately 25 mL of phenol/1,1,2,2-tetrachloroethane (mass ratio = 1/1) mixed solvent so as to adjust the concentration to 1.00 g/dL, the mixture is cooled to 30°C, rate of fall of the sample solution and time of fall in second of the solvent only are individually measured at 30°C with use of a full-automatic solution viscometer, and the intrinsic viscosity is determined by the equation [2] below.

$$\text{Intrinsic viscosity} = ((1 + 4KH\cdot\eta^{sp})^{0.5} - 1)/(2KH\cdot C) \quad ...[2]$$

where, $\eta^{sp} = \eta/\eta^0 - 1$, $\eta$ represents the time of fall in second of the sample solution, $\eta^0$ represents the time of fall in second of the solvent only, C represents the concentration of the sample solution (g/dL), and KH represents the Huggins'

constant to which a value of 0.33 was applied. The sample was dissolved at 110°C for 30 minutes.

The full-automatic viscometer applicable herein may be "SS600L-2" from Shibayama Scientific Co., Ltd.

The intrinsic viscosity of the resin composition of this embodiment, having two or more kinds of polybutylene terephthalate-based resin contained therein, is defined by an intrinsic viscosity of the mixture.

In the resin composition of this embodiment, the terminal carboxy group content of the polybutylene terephthalate-based resin is preferably 1 to 50 equivalents/ton (eq/ton), more preferably 1 to 45 equivalents/ton, and even more preferably 1 to 40 equivalents/ton. In particular, a terminal carboxy group content of 50 equivalents/ton or less is lower than the terminal carboxy group content of the polybutylene terephthalate-based resin obtainable under the usual conditions. Hence, the polybutylene terephthalate-based resin having such terminal carboxy group content is preferably produced typically under controlled production conditions. With the terminal carboxy group content of the polybutylene terephthalate-based resin fallen within any of these ranges, the intrinsic viscosity may be effectively suppressed from elevating during annealing, particularly during annealing in an inert gas atmosphere. Although the reason why such effect is demonstrated remains unclear, this is presumably attributable to a suitable balance between progress of polycondensation under annealing, and depolymerization due to the diol component.

The terminal carboxy group content of the polybutylene terephthalate-based resin in this embodiment may more preferably be 40 equivalents/ton or less, even more preferably 35 equivalents/ton or less, and yet more preferably 30 equivalents/ton or less. The lower limit value is preferably, but not specifically limited to, 1 equivalent/ton or above, more preferably 5 equivalents/ton or above, even more preferably 8 equivalents/ton or above, yet more preferably 10 equivalents/ton or above, and furthermore preferably 12 equivalents/ton or above. With the terminal carboxy group content fallen within any of the aforementioned ranges, the effect of this embodiment may be distinctively demonstrated.

The terminal carboxy group content of the polybutylene terephthalate-based resin may be determined by a method described later in EXAMPLES.

The terminal carboxy group content of the resin composition of this embodiment, having two or more kinds of polybutylene terephthalate-based resin contained therein, is defined by a terminal carboxy group content of the mixture.

The polybutylene terephthalate-based resin used in this embodiment preferably has a melting point of lower than 200°C, which is more preferably 197°C or lower. With the melting point adjusted to the aforementioned upper limit value or below, the resin may be effectively suppressed from elevating the intrinsic viscosity, and from increasing the yellowing. Also with the melting point of the polybutylene terephthalate-based resin fallen within any of the aforementioned ranges, the obtainable formed article tends to have further improved strength. The lower limit value of the melting point is preferably 150°C or above, more preferably 160°C or above, even more preferably 170°C or above, and yet more preferably 180°C or above. With the melting point adjusted to any of the aforementioned lower limit value or above, the obtainable formed article tends to have improved heat resistance.

The melting point of the polybutylene terephthalate-based resin may be measured by a method described later in EXAMPLES.

The melting point of the resin composition of this embodiment, having two or more kinds of polybutylene terephthalate-based resin contained therein, is defined by a melting point of the mixture.

The polybutylene terephthalate-based resin used in this embodiment preferably has a crystallization temperature (Tc) of 130°C or higher, and 180°C or lower. With the crystallization temperature adjusted to the lower limit value or above, the obtainable formed article becomes less likely to soften, and to cause defect. The crystallization temperature (Tc) of the polybutylene terephthalate-based resin used in this embodiment is preferably 135°C or higher, more preferably 140°C or higher, and even may be 143°C or higher. Meanwhile, with the crystallization temperature adjusted to 180°C or below, the formed article may be more effectively suppressed from causing uneven melting. With the polybutylene terephthalate-based resin given as a copolymeric polybutylene terephthalate, the formed article may be effectively suppressed from degrading the crystallinity, and tends to improve the heat resistance, depending on the copolymerizable component. The upper limit value of the crystallization temperature of the polybutylene terephthalate-based resin used in this embodiment is more preferably 175°C or below, and even more preferably 170°C or below.

The crystallization temperature of the polybutylene terephthalate-based resin may be measured by a method described later in EXAMPLES.

The crystallization temperature of the resin composition of this embodiment, having two or more kinds of polybutylene terephthalate-based resin contained therein, is defined by a crystallization temperature attributable to the largest exothermic peak.

<<Method for Producing Polybutylene Terephthalate-Based Resin>>

The method for producing the polybutylene terephthalate-based resin used in this embodiment may be any of known methods, without special limitation. The resin is usually obtainable by subjecting the terephthalic acid component, the 1,4-butanediol component, and other optional dicarboxylic acid component and diol component, at least either to transesterification or to esterification.

In a special case where the copolymeric polybutylene terephthalate having the aforementioned melting point and a terminal carboxy group content of 30 equivalents/ton or smaller is produced, such polymer is obtainable by adding a copolymerizable component (third component) together with the terephthalic acid component and the 1,4-butanediol component, and the mixture is subjected at least either to transesterification or to esterification to obtain a low polymer, and then subjecting the thus obtained low polymer to melt polycondensation. These reactions may proceed in a batch scheme or continuous scheme.

The terephthalic acid component, applicable herein besides terephthalic acid, may be one, or two or more kinds of terephthalic acid derivative such as alkyl terephthalate (the alkyl group preferably having 1 to 3 carbon atoms, and more preferably one), and halide. Also the isophthalic acid component as the copolymerizable component, applicable herein besides isophthalic acid, may be one, or two or more kinds of isophthalic acid derivative such as alkyl isophthalate (the alkyl group preferably having 1 to 3 carbon atoms, and more preferably one), and halide. The same will apply to other dicarboxylic acid component.

The method for obtaining the low polymer is exemplified by a method that relies upon at least either transesterification or esterification, with use of a single-stage of multi-stage reactor, with or without using a catalyst, and under normal pressure or increased pressure.

The melt polycondensation method is exemplified by a method by which produced water or alcohol is distilled off, with use of a single-stage or multi-stage reactor, in the presence of a catalyst, under reduced pressure and heating. The polycondensation catalyst used herein is exemplified by compounds of antimony, germanium, titanium or aluminum.

Besides the aforementioned catalysts, any additive such as reaction auxiliary or antioxidant is applicable, wherein the reaction auxiliary includes phosphorus-containing compounds such as orthophosphoric acid, phosphorous acid, hypophosphorous acid, polyphosphoric acid, and esters or metal salts thereof; alkali metal compounds including sodium compounds such as sodium hydroxide and sodium benzoate, lithium compound such as lithium acetate, and potassium compounds such as potassium hydroxide and potassium acetate; and, alkali earth metal compounds such as magnesium acetate and calcium acetate.

For increased rate of reaction, preferred conditions to be applied may include elevating the degree of decompression, elevating the reaction temperature, or increasing the rate of surface refreshment of the reaction liquid.

The polybutylene terephthalate-based resin obtained by melt polycondensation is usually taken out in the form of strand or sheet, through an discharge port provided to the bottom of a melt polycondensation tank, and then cut with a cutter while water-cooled or after water-cooled, to obtain granule typically in the form of pellet or chip (with a length of approximately 3 to 10 mm, for example).

In the production of the polybutylene terephthalate-based resin used in this embodiment, the polycondensation catalyst to be employed is particularly preferably titanium compound, which is typically tetrabutyl titanate. With use of the titanium compound whose catalytic activity is high overall, it now becomes possible to produce the polybutylene terephthalate-based resin particularly suitable for powder additive manufacturing, only with less amount of production of any catalyst-derived substance. The titanium compound as a catalyst can particularly effectively proceed the production of the polybutylene terephthalate-based resin, if added portionwise in a low polymer production process and in a polycondensation process. The amount of addition of the titanium compound, in terms of titanium element relative to the amount of the producible polybutylene terephthalate-based resin, is preferably adjusted to 10 to 40 ppm by mass in the low polymer production process, and 30 to 70 ppm by mass in the polycondensation process, totaling 40 to 110 ppm by mass. Too less amount of the total addition may excessively slow down the polycondensation. Meanwhile, too much amount thereof tends to intensify yellowing during annealing. Note that the lesser the amount of addition of the titanium compound, the lesser the yellowing during annealing. From the viewpoint of reducing the yellowing during annealing, the amount of addition of the titanium compound in terms of titanium element is preferably 10 to 40 ppm by mass in the low polymer production process, and 30 to 70 ppm by mass in the polycondensation process, totaling 40 to 110 ppm by mass.

For production of the polybutylene terephthalate-based resin with relatively low melting point, or with relatively low content of terminal carboxy group, a possible method for producing such polybutylene terephthalate-based resin relies upon suitable selection of the production conditions, thereby directly obtaining the polybutylene terephthalate-based resin that satisfies the aforementioned properties as a result of melt polycondensation. Although the conditions are not unconditionally definable since they are variable depending on processes and apparatuses, an exemplary method may be such as controlling the amount of catalyst, or controlling the production temperature and degree of decompression, with use of a relatively small-scale apparatus (typically with a 1 $m^3$ polymerization tank) for producing the polybutylene terephthalate-based resin, and conducting the polycondensation within a relatively short time.

In the prior polycondensation process, involving copolymerization, of the polybutylene terephthalate-based resin, the final stage thereof has been usually conducted at a temperature of approximately 245°C, and at a pressure of approximately 0.13 to 0.4 kPa. The polybutylene terephthalate-based resin obtainable in an industrial scale (typically with a 4 $m^3$ polymerization tank), under such prior usual conditions for producing the polybutylene terephthalate-based resin, typically has a terminal carboxy group content of approximately 20 to 40 equivalents/ton, which exceeds the range

specified in this embodiment.

In contrast, in the production of the polybutylene terephthalate-based resin in this embodiment, the obtainable polybutylene terephthalate-based resin has the melting point lower than that of the prior polybutylene terephthalate-based resin, making it possible to lower the temperature in the polycondensation process. The temperature in the final stage of the polycondensation process is preferably set for example to approximately 235°C, which is lower than in the prior method, meanwhile the pressure during polycondensation is preferably set low to approximately 0.13 kPa, under high vacuum. The polycondensation time is preferably set to approximately 2 to 4 hours.

<Phosphorus Atom-Containing Compound>

The resin composition of this embodiment contains a phosphorus atom-containing compound.

Note that the phosphorus atom-containing compound used in this embodiment is understood to exclude any compound usable as a phosphorus-containing stabilizer (for example, organophosphite compound).

Types of the phosphorus atom-containing compound are not specifically limited so long as they contain phosphorus, and may either be inorganic or organic. Organic compound is preferred.

The phosphorus atom-containing compound is exemplified by phosphate ester, phosphazene, phosphinate, and reaction product between melamine and phosphoric acid, among them preferred are phosphazene, phosphinate, and the reaction product between melamine and phosphoric acid; more preferred are phosphazene and phosphinate; and even more preferred is phosphinate. The compounds demonstrate high affinity with thermoplastic resin, and are less likely to bleed out under high temperatures, thus presumably making the powder very less likely to fuse even under preheating at temperatures close to the melting point.

The phosphate ester may be understood referring to the description in paragraph [0050] of JP 2013-155279 A, the content of which is incorporated by reference into this specification.

The phosphazene may be understood referring to the description in paragraphs [0055] to [0063] of JP 2013-155279 A, the content of which is incorporated by reference into this specification.

The reaction product between melamine and phosphoric acid may be understood referring to the description in paragraphs [0065] to [0068] of JP 2013-155279 A, the content of which is incorporated by reference into this specification.

The phosphinate is preferably a phosphinate represented by formula (1) or (2) below. The phosphinate represented by formula (1) is more preferred.

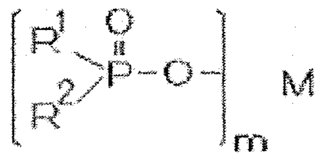
(1)

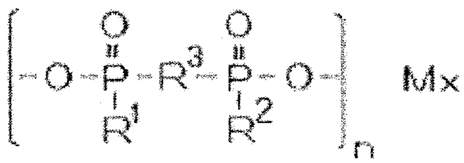
(2)

(In the formulae, each of $R^1$ and $R^2$ independently a straight-chain or branched alkyl group having 1 to 6 carbon atoms, or phenyl group, $R^3$ represents a straight-chain or branched alkylene group having 1 to 10 carbon atoms, arylene group having 6 to 10 carbon atoms, or arylalkylene group having 7 to 10 carbon atoms, M represents a calcium ion, aluminum ion, zinc ion or magnesium ion, m represents 2 or 3, n represents 1 or 3, and X represents 1 or 2.)

In formula (1) and formula (2), each of $R^1$ and $R^2$ independently and preferably represents an alkyl group having 1 to 6 carbon atoms, such as methyl group, ethyl group, isopropyl group, butyl group, and pentyl group, or a phenyl group, more preferably represents an alkyl group having 1 to 6 carbon atoms, even more preferably represents a methyl group or ethyl group, and yet more preferably represents an ethyl group. The phenyl group may have a substituent. The substituent is exemplified by methyl group.

$R^3$ preferably represents an alkylene group having 1 to 10 carbon atoms such as methylene group, ethylene group, propylene group, butylene group, and 2-ethylhexylene group, or phenylene group. Alkylene group having 1 to 4 carbon atoms, or phenylene group is preferred.

M preferably represents an aluminum ion.

The phosphinate is specifically exemplified by calcium bis(dimethylphosphinate), aluminum tris(dimethylphosphinate), calcium bis(ethyl methylphosphinate), aluminum tris(ethyl methylphosphinate), calcium bis(diethylphosphinate), aluminum tris(diethylphosphinate), calcium bis(methyl n-propylphosphinate), aluminum tris(methyl n-propylphosphinate), calcium bis(methyl phenylphosphinate), aluminum tri(methyl phenylphosphinate), calcium bis(diphenylphosphinate), aluminum tris(diphenylphosphinate), and calcium methane bis(dimethylphosphinate). Among them, preferred is aluminum tris(diethylphosphinate), from the viewpoint of further lowering the shearing stress.

The content of the phosphorus atom-containing compound (preferably phosphinate) in the resin composition of this embodiment, per 100 parts by mass of the polybutylene terephthalate-based resin, is preferably 5 parts by mass or more, more preferably 10 parts by mass or more, even more preferably 13 parts by mass or more, and yet more preferably 15 parts by mass or more. At or above the lower limit value, stable powder applicability is obtainable. Meanwhile, the content, per 100 parts by mass of the polybutylene terephthalate-based resin, is preferably 60 parts by mass or less, more preferably 50 parts by mass or less, even more preferably 40 parts by mass or less, and yet more preferably 30 parts by mass or less. At or below the upper limit value, the resin composition may be suppressed from degrading the toughness during modeling, and can stabilize the modeling.

In the resin composition of this embodiment, the concentration of phosphorus atom derived from the phosphorus atom-containing compound (preferably phosphinate) is preferably 7% by mass or higher, more preferably 9% by mass or higher, meanwhile preferably 35% by mass or lower, and more preferably 32% by mass or lower. Within these ranges, the effect of this invention may be more effectively demonstrated.

<Reinforcing Filler>

The resin composition of this embodiment may contain a reinforcing filler, but not necessarily. With the reinforcing filler contained therein, the obtainable formed article may have enhanced mechanical strength.

The reinforcing filler may have, for example, scaly, spherical, acicular or fibrous shape. Fibrous reinforcing filler (reinforcing fiber) is preferred. Component of the reinforcing filler is exemplified by glass, metal oxide, metal hydroxide, carbonate and sulfate. Glass is preferred.

The reinforcing fiber is preferably carbon fiber or glass fiber, and more preferably glass fiber.

Next, the glass fiber preferably used in this embodiment will be explained.

The glass fiber used herein is obtainable by melt spinning of commonly available glass such as E-glass, C-glass, D-glass, R-glass, A-glass, S-glass, and alkali-resistant glass, wherein any of them is applicable without special limitation so long as they may be processed in the form of fiber. In this embodiment, E-glass is preferably contained.

The glass fiber used in this embodiment is preferably surface-treated with a surface treatment agent such as silane coupling agent, which is exemplified by $\gamma$-methacryloxypropyl trimethoxysilane, $\gamma$-glycidoxypropyl trimethoxysilane, and $\gamma$-aminopropyl triethoxysilane. The amount of adhesion of the surface treatment agent is preferably 0.01 to 1% by mass of the glass fiber. The glass fiber applicable herein may further be surface-treated as necessary with lubricant such as fatty acid amide compound or silicone oil; antistatic agent such as quaternary ammonium salt; film-formable resin such as epoxy resin, or urethane resin; and mixture of film-formable resin typically with heat stabilizer.

The glass fiber is commercially available. The commercially available products typically include T-187, T-286H, T-756H and T-289H, all from Nippon Electric Glass Co., Ltd.; DEFT2A from Owens Corning Corporation; HP3540 from PPG Industries; and CSG3PA820 from Nitto Boseki Co., Ltd.

The content of the reinforcing filler, when contained in the resin composition of this embodiment, is preferably 20 parts by mass or more per 100 parts by mass of the polybutylene terephthalate-based resin, more preferably 30 parts by mass or more, and even more preferably 35 parts by mass or more. Meanwhile, the reinforcing filler is preferably 90 parts by mass or less per 100 parts by mass of the polybutylene terephthalate-based resin, more preferably 80 parts by mass or less, even more preferably 75 parts by mass or less, and may even be 70 parts by mass or less.

The reinforcing filler, when contained in the resin composition of this embodiment, preferably accounts for 10 to 45% by mass of the resin composition, the percentage is more preferably 15 to 40% by mass, and even may be 20 to 35% by mass.

The resin composition of this embodiment may contain only one kind, or two or more kinds of the reinforcing filler. When two or more kinds are contained, the total content preferably falls within any of the aforementioned ranges.

<Stabilizer>

The resin composition of this embodiment may contain a stabilizer.

The stabilizer is exemplified by phenol-based stabilizer, amine-based stabilizer, phosphorus-containing stabilizer, thioether-based stabilizer, and epoxy-modified styrene-acrylic copolymer. Among them, preferred in this embodiment are phenol-based stabilizer and epoxy-modified styrene-acrylic copolymer. With use of phenol-based stabilizer or epoxy-modified styrene-acrylic copolymer, the formed article may be given stability of hue, for example.

The phenol-based stabilizer is preferably hindered phenol-based stabilizer. The phenol-based stabilizer is

exemplified by pentaerythritol tetrakis[3-(3,5-di-tert-butyl-4-hydroxyphenyl)propionate], octadecyl-3-(3,5-di-tert-butyl-4-hydroxyphenyl)propionate, thiodiethylene bis[3-(3,5-di-tert-butyl-4-hydroxyphenyl)propionate], N,N'-hexane-1,6-diyl-bis[3-(3,5-di-tert-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl]phosphonate, 3,3',3",5,5',5"-hexa-tert-butyl-a,a',a"-(mesitylene-2,4,6-triyl)tri-p-cresol, 4,6-bis(octylthiomethyl)-o-cresol, ethylene bis(oxyethylene)bis[3-(5-*tert*-butyl-4-hydroxy-*m*-tolyl)propionate], hexamethylene bis[3-(3,5-di-*tert*-butyl-4-hydroxyphenyl)propionate], 1,3,5-tris(3,5-di-*tert*-butyl-4-hydroxybenzyl)-1,3,5-triazine-2,4,6(1H,3H,5H)-trione, 2,6-di-*tert*-butyl-4-(4,6-bis(octylthio)-1,3,5-triazine-2-ylamino)phenol, and 2-[1-(2-hydroxy-3,5-di-*tert*-pentylphenyl)ethyl]-4,6-di-*tert*-pentylphenyl acrylate.

The epoxy-modified styrene-acrylic copolymer may be understood referring to the description in paragraphs [0044] to [0049] of JP 2017-155147 A, the content of which is incorporated by reference into this specification.

The other stabilizer may be understood referring to the description in paragraphs [0071] to [0078] of JP 2020-084037 A, the content of which is incorporated by reference into this specification.

Commercially available stabilizer is exemplified by "Irganox 1010" (trade name, same will apply hereinafter), and "Irganox 1076" from BASF SE; and "ADK STAB AO-50", "ADK STAB AO-60", and "ADK STAB AO-412S" from ADEKA Corporation.

In the resin composition of this embodiment, the content of the stabilizer is preferably 3% by mass or less. With the content of the stabilizer adjusted to 3% by mass or less, the powder may be suppressed from fusing during preheating. The content of the stabilizer is preferably 2% by mass or less. The lower limit value of the content of the stabilizer may be 0.01% by mass or above, although ideally 0% or above.

The resin composition of this embodiment may contain only one kind, or two or more kinds of the stabilizer. When two or more kinds are contained, the total content preferably falls within any of the aforementioned ranges.

<Other Components>

The resin composition of this embodiment may contain a resin component or additive other than the aforementioned components.

Such other resin component is exemplified by thermoplastic resin such as polyester resin, other than the polybutylene terephthalate-based resin.

Such other additive is exemplified by reactive compound such as epoxy compound; flame retardant such as melamine; nucleating agent; flow aid; antioxidant; anti-coloring agent; pigment; dye; UV absorber; infrared absorber; mold releasing agent; lubricant; and anti-static agent.

In the resin composition of this embodiment, the total of the polybutylene terephthalate-based resin and the phosphorus atom-containing compound preferably accounts for 90% by mass or more of the components of the resin composition excluding the reinforcing filler, more preferably accounts for 95% by mass or more, and even more preferably accounts for 98% by mass or more.

<Production of Resin Composition>

Production of the resin composition of this embodiment is not specifically limited, so long as the resin composition can contain the individual components, and may rely upon mixing and melt kneading of the individual components. More specifically, the resin composition may be produced typically by pre-mixing the polybutylene terephthalate-based resin with optional components with use of any of various mixers such as tumbler or Henschel mixer, and then by melt-kneading the mixture with use of a Banbury mixer, roll mixer, Bravender, single-screw kneader/extruder, twin-screw kneader/extruder, or kneader.

The resin composition of this embodiment may alternatively be produced typically by feeding the individual components, without being premixed or only partially premixed, through a feeder to an extruder.

Still alternatively, a desired resin composition may be produced typically by premixing a part of the components and feeding the mixture to an extruder to produce a resin composition called masterbatch, again by mixing the masterbatch with the residual components, and then by melt-kneading the mixture.

Heating temperature for melt-kneading is suitably selectable usually in the range from 220 to 300°C. Too high temperature would accelerate degradation of the resin or would make a decomposition gas more likely to emit, thus needing proper selection of a screw construction typically in consideration of shear heating. Antioxidant or heat stabilizer is preferably used for suppressing the decomposition during kneading or subsequent modeling.

<Powderization of Resin Composition>

The resin composition thus produced by the aforementioned processes may preferably be extruded into a pellet form, and then powderized for use in powder additive manufacturing. That is, this embodiment also relates to a powder

formed of the resin composition, intended for use in powder additive manufacturing. Method for powderization is not specifically limited, to which any of ball mill, jet mill, stamp mill, or freeze crushing is applicable.

<Powder>

The powder of this embodiment is intended for use in powder additive manufacturing, contains a polybutylene terephthalate-based resin that has a terephthalic acid-derived structural unit and a 1,4-butanediol-derived structural unit, and, a phosphorus atom-containing compound, and the powder demonstrates a shearing stress of 0.30 N/cm$^2$ or smaller, after annealed for one hour at a temperature lower by 25°C than a melting point of the polybutylene terephthalate-based resin measured by differential scanning calorimetry.

The powder preferably has the particle size Dso within the range from 20 to 80 μm. The particle size $D_{50}$ is preferably 40 um or more, and 70 um or smaller. The particle size $D_{50}$ may be measured by a method described later in EXAMPLES.

<Method for Modeling>

A formed article is obtainable with use of the powder of this embodiment, by powder additive manufacturing. The method for modeling is not specifically limited, to which any method having been practiced as the powder additive manufacturing method is applicable. An exemplary method is typically such that a formed article is manufactured with use of the powder composed of the resin composition of this embodiment, and with use of a commercially available apparatus for powder additive manufacturing.

More specifically, the modeling is accessible with use of a powder additive manufacturing apparatus that includes: a modeling stage; a film forming unit that forms a film of the powder on the modeling stage; a heating unit that heats the thus formed film typically by irradiating laser light, to melt and fuse the powder to form a formed article layer; a moving unit that moves the modeling stage in the stacking direction (vertical direction); and a control unit that controls to repeat the film formation, heating, and moving of the stage, to stack the formed article layers. In a further preferred mode of this embodiment that relies upon laser heating, the modeling may proceed according to steps (1) to (4) below:

(1) forming a thin layer of the powder;
(2) selectively irradiating the preheated thin layer with laser light, to form a formed article layer in which the powder is melted and fused;
(3) bringing down the modeling stage by a distance equivalent to the thickness of the formed formed article layer; and
(4) repeating steps (1) to (3) multiple times in this order, to stack the formed article layers.

In step (1), the thin layer of the powder is formed. For example, the powder fed from a powder feeder is spread flat on the modeling stage with use of a recoater. The thin layer is formed directly on the modeling stage, or on the powder having already been spread or on a formed article layer having already been formed, so as to contact therewith.

The thickness of the thin layer may be determined depending on the thickness of the formed article layer. The thickness of the thin layer may be freely determined depending on the accuracy of the three-dimensional formed article to be manufactured, and is usually around 0.01 to 0.3 mm.

In step (2), laser light is irradiated on the thus formed thin layer, selectively at a point where the formed article layer is formed, to melt and fuse the powder at the irradiated point. Adjoining powders thus fuse to form a melt conjugate, and this turns into the formed article layer. Since the powder that received laser energy also fuse with the already formed layer, so that also adjoining layers become fused. The powder not irradiated by the laser light is recovered as the excessive particles, and recycled as the recovered particles.

Alternatively in step (2), the powder may be melted and fused by selectively spraying a melt accelerator (a component that accelerates melting of the resin) and a surface modifier (a component that forms an outline of the layer), and then by illuminating the entire area with an infrared lamp, xenon lamp or halogen lamp, in place of selectively irradiating the laser light. Similarly to the case with the laser irradiation, the powder remained unmelt and unfused is recovered as the excessive powder, and recycled as the recovered powder.

In step (3), the modeling stage is brought down by a distance equivalent to the thickness of the formed article layer formed in step (2), and kept on standby for the next step (1).

Use of the resin composition of this embodiment makes the powder less likely to fuse, enables stable powder application, and improves appearance and performance of the formed article.

The resin composition of this embodiment is preferably applied to the powder additive manufacturing in an inert gas atmosphere. The inert gas atmosphere in this context means an atmosphere in which an inert gas accounts for 90% (% by volume) or more of the gas, excluding a gas produced from the resin composition of this embodiment, in a space where annealing takes place. The percentage is preferably 92% or more, more preferably 95% or more, even more

preferably 98% or more, and yet more preferably 99% or more. The inert gas is exemplified by nitrogen and argon.

Recent efforts in the powder additive manufacturing have been made on use of an air atmosphere, in place of the inert gas atmosphere, aiming at reducing the apparatus cost or simplifying the handling. This effect is effectively demonstrated also when using the resin composition of this embodiment. Note that the air atmosphere means the naturally occurring air in which oxygen accounts for approximately 21% by volume, while the inert gas such as nitrogen gas accounts for the residual majority. The effect of use of the resin composition of this embodiment will be effectively demonstrated also in an atmosphere whose oxygen concentration is intermediate between the inert gas atmosphere and the air atmosphere. Note, however, that this embodiment is by no means understood limitedly to this mode.

Temperature of a modeling area in the powder additive manufacturing is preferably set approximately 5 to 20°C lower than the melting point of the resin composition to be used. Modeling time may be suitably determined depending on the size of the formed article.

<Applications of Formed article>

The formed article of this embodiment is formed of the resin composition of this embodiment. The formed article of this embodiment is versatile for various applications. More specifically, the formed article is particularly suitable for electrical equipment, electronic equipment, and components thereof, which are preferably exemplified by components for contact electrical/electronic equipment such as relay, switch, connector, breaker, electromagnetic switch, terminal switch, sensor, actuator, microswitch, microsensor and microactuator; and enclosure of the electrical/electronic equipment.

EXAMPLES

This invention will further be detailed referring to Examples. All materials, amounts of consumption, proportions, process details and procedures described in Examples below may suitably be modified, without departing from the spirit of this invention. Hence, the scope of this invention is by no means limited to specific Examples below.

In a case where any measuring instrument used in Examples become unavailable typically due to discontinuation, the measurement may be conducted with use of other instrument having equivalent performances.

1. Raw Materials

<Method for Preparing Polybutylene Terephthalate-Based Resin A>

Into an esterification tank equipped with a stirrer, a nitrogen feed port, a heater, a thermometer, and a distillate tube, placed were 705.5 parts by mass of dimethyl terephthalate, 151.0 parts by mass of isophthalic acid, 613.8 parts by mass of 1,4-butanediol, and tetrabutyl titanate (33 ppm by mass in terms of titanium element, relative to the produced polymer) as a catalyst.

Next, the mixture while kept stirred was heated from 150°C to 210°C over 90 minutes, and kept at 210°C for 90 minutes, during which transesterification and esterification were allowed to proceed for a total duration of 180 minutes, while distilling off by-produced methanol and water.

Fifteen minutes before the end of the transesterification and esterification, magnesium acetate tetrahydrate was added so as to adjust the content, in terms of metal magnesium, to 48 ppm by mass relative to the produced polymer, next an antioxidant ("Irganox 1010", from BASF SE) was added (up to an amount of 0.15% by mass relative to the produced polymer), and tetrabutyl titanate was further added (up to an amount of 61 ppm by mass, in terms of titanium element, relative to the produced polymer).

The reaction product was then transferred to a polycondensation tank equipped with a stirrer, a nitrogen feed port, a heater, a thermometer, a distillate tube, and an evacuation port, and then subjected to melt polycondensation.

The melt polycondensation was maintained while gradually reducing the pressure in the tank from the normal pressure down to 0.13 kPa over 85 minutes, and at 0.13 kPa or below thereafter. The reaction temperature was maintained at 210°C for 15 minutes after the start of evacuation, then elevated up to 235°C over 45 minutes, and kept at this temperature. The reaction was terminated upon arrival at a predetermined stirring torque. The melt polycondensation was found to take 200 minutes.

Next, the inner pressure of the tank was recovered from the reduced state with nitrogen gas, and then further pressurized to draw out the polymer. The polymer was extruded through a nozzle into strands, the strands were cooled in a cooling water bath, and then cut and pelletized with use of a strand cutter. A copolymeric polybutylene terephthalate with an isophthalic acid content of 20 mol% was thus obtained.

Components listed in Table 1 below were used for producing the resin composition.

[Table 1]

| | Abbrev. | |
|---|---|---|
| Polybutylene terephthalate-based resin | A | Acid component (80 mol% terephthalic acid and 20 mol% isophthalic acid), and diol component (1,4-butanediol) were polymerized.<br>Intrinsic viscosity = 0.85 dL/g, terminal carboxy group content = 27 eq/ton, m.p. = 195°C, crystallization temperature = 145°C |
| Stabilizer | B1 | Irganox 1010, from BASF SE<br>Pentaerythritol tetrakis[3-(3,5-di-*tert*-butyl-4-hydroxyphenyl)propionate]<br>m.p. = 110 to 130°C, molecular weight = 1178 |
| | B2 | ADK STAB PEP36, from ADEKA Corporation<br>3,9-Bis(2,6-di-*tert*-butyl-4-methylphenoxy)-2,4,8,10-tetraoxa-3,9-diphosphaspiro[5.5]undecane<br>m.p. = 234 - 240°C, molecular weight = 633 |
| | B3 | ADK STAB AO-80, from ADEKA Corporation<br>3,9-Bis{2-[3-(3-*tert*-butyl-4-hydroxy-5-methylphenyl)propionyloxy]-1,1-dimethylethyl}-2,4,8,10-tetraoxaspiro[5.5]undecane<br>m.p. = 110 -130°C, molecular weight = 741 |
| | B4 | Joncryl ADR4468, from BASF SE<br>Epoxy-modified styrene-acrylic copolymer<br>Weight-average molecular weight (Mw) = 6100 - 7500, epoxy equivalent = 270 - 300 g/mol |
| Phosphorus atom-containing compound | C | Exolit OP 1240, from Clariant Ltd.<br>Aluminum tris(diethylphosphinate)<br>m.p. = 184.232°C |
| Flame retardant | D | MCA melamine cyanurate, from Hainan Zhongxin Chemical Co., Ltd. |
| Reinforcing filler | E | Glass fiber T-187, from Nippon Electric Glass Co., Ltd. |

<Measurement of Terminal Carboxy Group Content of Polybutylene Terephthalate-Based Resin>

For pretreatment before analysis, a sample (polybutylene terephthalate-based resin pellet) was powderized, dried at 120°C for 15 minutes with use of a hot air drier, and cooled in a desiccator down to room temperature. Then 0.1 g of the sample was precisely weighed into a test tube, to which 3 mL of benzyl alcohol was added, allowed to dissolve at 195°C for 3 minutes under blowing of dry nitrogen gas, to which 5 mL of chloroform was gradually added, and then cooled down to room temperature. To the solution, one to two drops of phenol red indicator was added, the mixture was kept stirred under blowing of dry nitrogen gas, and titrated with a 0.1N sodium hydroxide solution in benzyl alcohol, to find an end point upon color change from yellow to red. Also a blank, having no sample dissolved therein, was processed in the same way, and the terminal carboxy group content was estimated by the equation below.

$$\text{Terminal carboxy group content (equivalent/ton)} = (a - b) \times 0.1 \times f/w$$

In the equation, "a" represents the amount of the 0.1N sodium hydroxide solution in benzyl alcohol (μL) required for the titration, "b" represents the amount of the 0.1N sodium hydroxide solution in benzyl alcohol (μL) required for titrating the blank, w represents the amount of sample (g), and f represents a titer of the 0.1N sodium hydroxide solution in benzyl alcohol.

The titer (f) of the 0.1N sodium hydroxide solution in benzyl alcohol was determined by the method below.

Five milliliters of methanol was sampled in a test tube, to which one or two drops of phenol red solution in ethanol was added as an indicator, the mixture was titrated with 0.4 mL of a 0.1N sodium hydroxide solution in benzyl alcohol to a point of color change, to which 0.2 mL of a 0.1N aqueous hydrochloric acid solution with a known titer was added as a reference solution, and the mixture was again titrated with a 0.1N sodium hydroxide solution in benzyl alcohol

to a point of color change. These operations were conducted under blowing of dry nitrogen gas. The titer (f) was estimated by the equation below.

Titer (f) = [Titer of aq. 0.1N HCl solution × sampled volume of aq. 0.1N HCl solution (μL)]/[Titration volume of 0.1N NaOH solution in benzyl alcohol (μL)]

2. Examples 1 to 4, and Comparative Examples 1 and 2

For each of Examples and Comparative Examples, the individual components listed in Table 1 were blended according to the amounts of consumption (all in parts by mass) summarized in Table 2, each mixture was kneaded in a twin-screw extruder ("TEX30α" from The Japan Steel Works, Ltd.) at a barrel preset temperature of 220°C, and a screw speed of 200 rpm, extruded into strands, quenched in a water bath, and pelletized with a pelletizer to obtain pellet. The obtained pellet was milled with a cryomill ZM100 from Retsch GmbH, to obtain each powder.

<Particle Size $D_{50}$ of Powder>

Five grams of the thus obtained powder was weighed, and the particle size distribution of the powder was measured with use of a particle size analyzer (LA-960, from Horiba Ltd.). From the thus detected particle size distribution of the powder, the particle size $D_{50}$ located at a frequency distribution of 50% was determined.

<Measurement of Melting Point and Crystallization Temperature>

Each of the melting point (Tm) and the crystallization temperature (Tc) of the resin composition and the polybutylene terephthalate-based resin were measured by differential scanning calorimetry (DSC).

More specifically, 5 to 7 mg of each pellet was compacted in a sample pan to prepare a measurement pan, and then heated with a differential scanning calorimeter in a nitrogen gas atmosphere, at a heating rate of 20°C/min from 30°C up to 300°C. The sample pan was maintained at 300°C for 3 minutes, then cooled at a cooling rate of 20°C/min from 300°C down to 30°C, maintained at 30°C for 3 minutes, and then heated again at a heating rate of 20°C/min from 30°C up to 300°C. A DSC curve obtained from the measurement after the second heating was analyzed, to determine the melting point at an apex of an endothermic peak, and the crystallization temperature at an apex of an exothermic peak. If there were a plurality of endothermic peaks, the melting point was determined on the basis of the largest endothermic peak. The melting point and the crystallization temperature were given in °C.

The differential scanning calorimeter used herein was "PYRIS Diamond DSC" from PerkinElmer Inc.

Also Tm - Tc (°C) of the resin composition was estimated from Tm and Tc of the resin composition, and summarized in Table 2.

<Shearing Stress of Powder>

The thus obtained powder was placed in a lower cell of 30 mm length, 30 mm width and 15 mm depth, and compressed under 5 kg load for 10 seconds. An upper cell was then placed on the lower cell, into which the powder was further placed, compressed similarly to the lower cell under 5 kg load for 10 seconds, the upper and lower cells were then allowed to stand without being displaced, in a hot air oven preset at a temperature (170°C) lower by 25°C than the melting point. The cells were taken out after one hour, placed on a stage of a powder shear tester, and then subjected to the test. The maximum shear load at which the upper and lower cells displace was found, and the powder shearing stress was determined by the equation below.

The powder shear tester used herein was Model DS-100 (from Tsutsui Scientific Instruments Co., Ltd.).

Wb: shear load on blank without powder (N)
Wp: shear load during test (N)
F: cross-sectional area of cell ($cm^2$): 9 $cm^2$
Powder shearing stress ($N/cm^2$) = (Wp - Wb) /F

[Table 2]

| | | Example 1 | Example 2 | Example 3 | Example 4 | Comparative Example 1 | Comparative Example 2 |
|---|---|---|---|---|---|---|---|
| Polybutylene terephthalate-based resin | A | 100 | 100 | 100 | 100 | 100 | 100 |
| Stabilizer | B1 | 0.2 | | 0.2 | 0.4 | | 0.1 |
| | B2 | | 1.2 | | | 1.0 | |
| | B3 | | 0.6 | | | 0.5 | |
| | B4 | 0.4 | | 0.4 | 0.5 | | 0.3 |
| Phosphorus atom-containing compound | C | 16.4 | 22.4 | 22.4 | 25.2 | | |
| Flame retardant | D | | | 1.2 | | | |
| Reinforcing filler | E | | | | 54.1 | | 43.0 |
| Particle size of powder $D_{50}$ | μm | 54 | 49 | 51 | 48 | 59 | 49 |
| Tm - Tc | °C | 47 | 47 | 48 | 48 | 30 | 31 |
| Shearing stress of powder | $N/cm^2$ | 0.18 | 0.19 | 0.15 | 0.16 | 0.64 | 0.38 |

In Table 2, Tm - Tc represents Tm - Tc (°C) of the resin composition.

As is clear from the results above, the resin compositions of this invention were found to suppress the powder fusion (Examples 1 to 4). In contrast, the resin compositions of Comparative Examples, demonstrating high shearing stress of the powder, would adversely affect formation of the thin layer during powder application. The invention is valuable for manufacturing stable products by powder additive manufacturing.

INDUSTRIAL APPLICABILITY

The resin composition of this invention is suitably used for powder additive manufacturing that belongs to three-dimensional (3D) printing technology, and is industrially applicable.

## Claims

1. A resin composition used for powder additive manufacturing, comprising a polybutylene terephthalate-based resin that has a terephthalic acid-derived structural unit and a 1,4-butanediol-derived structural unit, and, a phosphorus atom-containing compound,
   the resin composition demonstrating a shearing stress of 0.30 $N/cm^2$ or smaller, with the particle size $D_{50}$ adjusted within the range from 20 to 80 μm, after annealed for one hour at a temperature lower by 25°C than a melting point of the polybutylene terephthalate-based resin measured by differential scanning calorimetry.

2. The resin composition of claim 1, having a melting point, measured by differential scanning calorimetry, of lower than 200°C.

3. The resin composition of claim 1 or 2, demonstrating a difference between a melting point measured by differential scanning calorimetry, and a crystallization temperature measured by differential scanning calorimetry, of 40°C or more.

4. The resin composition of any one of claims 1 to 3, wherein the phosphorus atom-containing compound is a phosphinate.

**5.** The resin composition of any one of claims 1 to 3, wherein the phosphorus atom-containing compound is aluminum tris(diethylphosphinate) .

**6.** A powder for powder additive manufacturing, formed of the resin composition described in any one of claims 1 to 5.

**7.** A powder for powder additive manufacturing, comprising a polybutylene terephthalate-based resin that has a terephthalic acid-derived structural unit and a 1,4-butanediol-derived structural unit, and, a phosphorus atom-containing compound, and
the powder demonstrating a shearing stress of 0.30 $N/cm^2$ or smaller, after annealed for one hour at a temperature lower by 25°C than a melting point of the polybutylene terephthalate-based resin measured by differential scanning calorimetry.

**8.** The powder of claim 6 or 7, having a particle size $D_{50}$ of 20 to 80 um.

**9.** A method for manufacturing a formed article, the method comprising obtaining a formed article by powder additive manufacturing, with use of the powder described in any one of claim 6 to 8.

**10.** A formed article formed by powder additive manufacturing, with use of the powder described in any one of claims 6 to 8.

**INTERNATIONAL SEARCH REPORT**

International application No.
**PCT/JP2021/030031**

**A. CLASSIFICATION OF SUBJECT MATTER**

***C08K 5/5313***(2006.01)i; ***C08L 67/02***(2006.01)i; ***B29C 64/153***(2017.01)i; ***C08G 63/183***(2006.01)i; ***B33Y 70/00***(2020.01)i
FI: C08L67/02; C08K5/5313; C08G63/183; B29C64/153; B33Y70/00

According to International Patent Classification (IPC) or to both national classification and IPC

**B. FIELDS SEARCHED**

Minimum documentation searched (classification system followed by classification symbols)

C08L1/00-101/14, C08K3/00-13/08, B29C64/00-64/40, B29C67/00-67/08, B29C67/24-69/02, B29C73/00-73/34, B29D1/00-29/10, B29D33/00, B29D99/00, B33Y10/00-99/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/043573 A1 (BASF SE) 05 March 2020 (2020-03-05) claims, page 27, lines 1, 2, tables 1, 2, examples | 1-10 |
| X<br>A | JP 2019-1154 A (RICOH CO., LTD.) 10 January 2019 (2019-01-10) claims, paragraph [0071], example 7 | 1, 3, 6–10<br>2, 4, 5 |
| X<br>A | JP 2018-149800 A (RICOH CO., LTD.) 27 September 2018 (2018-09-27) claims, paragraph [0032], examples | 1, 3, 6–10<br>2, 4, 5 |
| X<br>A | JP 2020-37665 A (RICOH CO., LTD.) 12 March 2020 (2020-03-12) claims, paragraph [0068], examples | 1, 3, 6–10<br>2, 4, 5 |
| A | WO 2020/138188 A1 (MITSUBISHI CHEMICAL CORP.) 02 July 2020 (2020-07-02) claims, examples | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 October 2021** | **19 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/030031**

| Patent document cited in search report | Publication date (day/month/year) | Patent family member(s) | Publication date (day/month/year) |
|---|---|---|---|
| WO 2020/043573 A1 | 05 March 2020 | EP 3617270 A1 | |
| JP 2019-1154 A | 10 January 2019 | US 2018/0355144 A1<br>claims, paragraph [0085], example 7<br>EP 3415563 A1 | |
| JP 2018-149800 A | 27 September 2018 | US 2018/0264720 A1<br>claims, paragraph [0066], examples<br>EP 3375609 A1 | |
| JP 2020-37665 A | 12 March 2020 | US 2020/0398458 A1<br>claims, paragraph [0145], examples<br>WO 2019/093490 A1<br>AU 2018365919 A | |
| WO 2020/138188 A1 | 02 July 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016121013 A
- WO 2017179139 A
- JP 6033994 B
- JP 2013155279 A
- JP 2017155147 A
- JP 2020084037 A